# EUROPEAN PATENT APPLICATION

(11) **EP 1 070 449 A1**
(43) Date of publication of application: **24.01.2001**
(21) Application number: 99830466.1
(22) Date of filing: 21.07.1999
(51) Int. Cl.: A01D 46/00

(54) **Method and apparatus for picking olives from the tree**

(71) Applicant: Torresi, Lorena, 62018 Potenza Picena (Macerata) (IT)
(72) Inventor: Torresi, Lorena, 62018 Potenza Picena (Macerata) (IT)
(74) Representative: Sassatelli, Franco T., Dr.

(57) **Abstract**

The method provides the separation of the olives from the branchs by means of an air jet according to subsequent insistance positions on the foliage. Said air jet, making the separation, is given through an apparatus with a spot-face opening (1) of a nozzle (2) having the air from a duct (3) of a compressor (4) and supported on a supporting structure (5) with extensible part (6) which supports the duct un supports (7). With the nozzle (2) downward oriented, the air jet getting out through the spot-face opening (1) determines on the foliage insistance part an impact with shock wave with high vibration effect actuating the separation of the fruits which are on said foliage part.

## Description

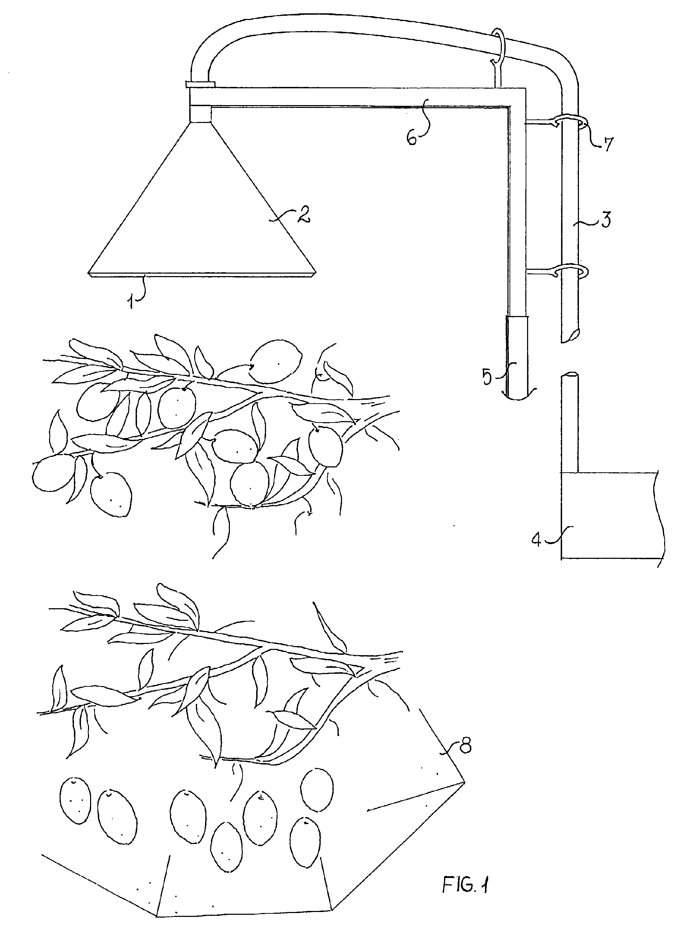

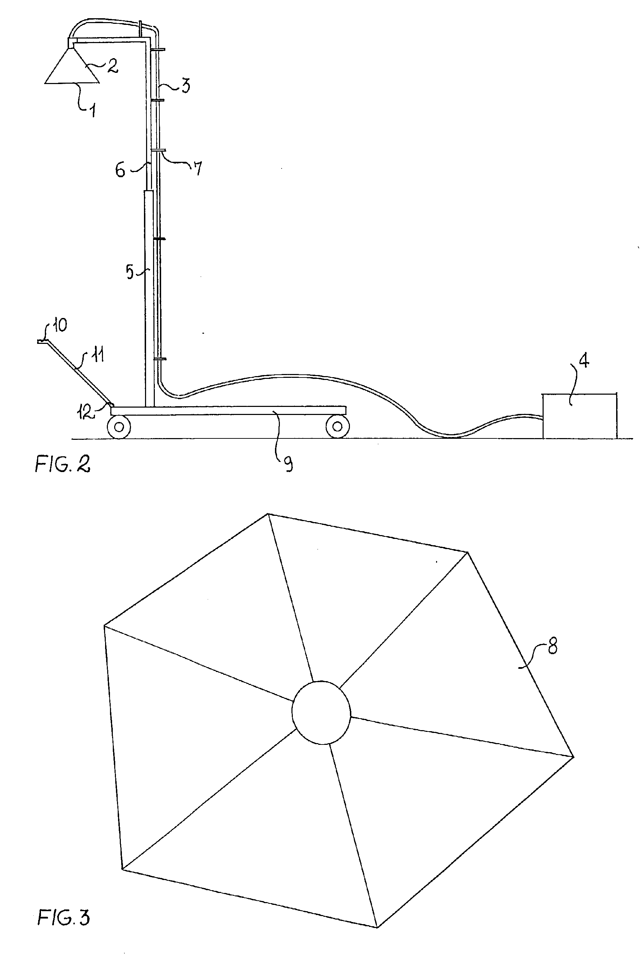

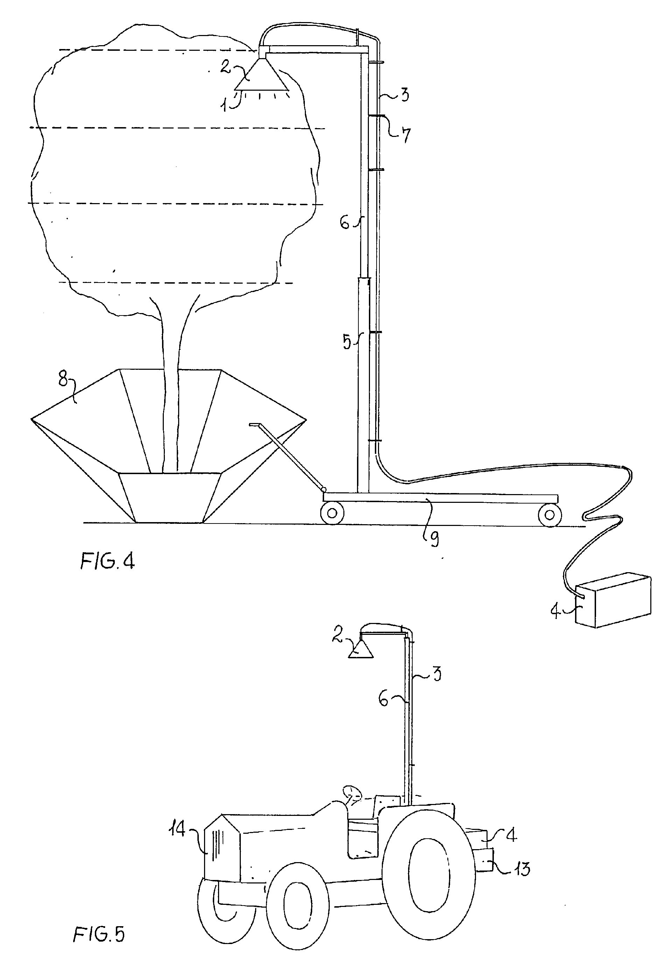

The invention refers to a new method and apparatus for picking the olives from the tree which principally carry out the separation of the olive from the branch by means of an air jet to be executed on subsequent insistance positions while the tree has not damages. Said air jet to be mechanical generated by an air pumping plant consisting of a compressor and of a duct. Said duct gives out the air jet by means of s spot-face nozzle, the length of which comes to define the part on the tree on which the working is to be made. Said spot-face nozzle to be put over the foliage using a supporting extensible structure to be placed on a truck for its transport. A characteristic of the invention consists that the apparatus which gives out compressed air provides a rectilinear getting out nozzle with a width of 1,5 - 2 centimetres able to determine on the working tree part an impact with shock wave oriented downward with high vibration effect able to produce the sepration of this particolar fruit. The working is completed on the ground by placing under the tree a picking tarpaulin means onto which the olives are to be collected at the end of the separation phase from the braches. The olive-tree is a no-thorny plant, high till 5 - 8 metres, of 1 - 6 metres of girth, often it is branched as far as its base with low, round and irregular foliage, the ovoid fruits with length of 1,5 - 3,5 centimetres to be picked in the months of november, december and january. The olive-tree is a very delicate plant, for example when wet it must be not touched with the hands because its small branches will be damaged. Currently the damaging problem is not solved such as the methods of mechanical picking coming in direct contact with the plant damaged it permanently. One of said current picking method, working by shaking, consists of a self-propelled machine that with taking around the trunk with a horizontal alternative movement shakes the plant so making the olives fall down. A second current used picking method provides the mechanical working only on the twigs by using a pneumatic machine brings in vibration suitable small taking combs. But also this shaking effect is incompatible with the natural fragility of the plant which shirks the mechanical contact. The invented apparatus brings the problem solution by introducing in this field a new picking method which completly excludes the mechanical contact onto any parts of the plant. On this base the invented method provides the separation of the olives while the foliage has not damages. Said separation by means of an air jet actuated, as already cited, a shock wave downward with high vibration effect. The invented method essentially provides the separation of the olives from the branchs by means of an air jet, according to subsequent insistance positions on the foliage, gave out through an apparatus with a spot-face opening 1 of a nozzle 2 having the air from a duct 3 of a compressor 4 and supported on a supporting structure 5 with extensible part 6 which supports the duct on supports 7. With the nozzle 2 downward oriented, the air jet getting out through the spot-face opening 1 determines on the foliage insistance part an impact with shock wave with high vibration effect actuating the separation of the fruits which are on said foliage part. At the end of the removal working the fruits are picked from a picking tarpaulin means 8 previously placed on the ground around the trunk. In an embodiment the supporting structure 5 with extensible part 6 is positioned on a truck 9 to be pulled by a taking part 10 of an arm 11 to be moved on joint 12. In a second embodiment both the supporting structure 5 with extensible part 6 than the compressor 4 are positioned onto the bedplate 13 of a tractor 14. Preferred embodiments of the invention are illustrated by way of not limiting example in the accompanying drawings of sheets 1, 2 and 3. In sheet 1 fig. 1 is schematic essential view of the apparatus for the picking. It is shown under the apparatus an insistance foliage part with branchs, leaves and fruits before the separation and in lower view the separation of the branchs with the leaves from the fruits which fall down on the ground onto the tarpaulin means 8, this after that said fruits have been attacked from the vertical shock wave formed by the air jet in getting out through the spot-face opening 1 of the nozzle 2. In sheet 2 fig. 2 is view of the truck to be manually pulled. Fig. 3 is perspective view of a trapaulin means 8 to be placed on the ground around the plant trunk. In sheet 3 are schematically illustrated the picking phases of the olives to be actuated with the apparatuses illustrated in figures 2 and 3. In detail fig. 4 is view of the olive-tree foliage divides in three depth sectors according which to operate subsequently from the top the picking. Fig. 5 is lateral view of the invented apparatus to be positioned on a tractor. In the realization it is possible to use all the known prior art to put in working position one or more nozzles getting out the air jet with spot-face effect according to the invention. The invented apparatus is then integrated with other in relation to the use necessities.

## Claims

1. Method and apparatus for picking olives from the tree providing the separation of the olives from the branchs by means of an air jet, according to subsequent insistance positions on the foliage; characterized in that:
- said air jet, making the separation, is given out through an apparatus with a spot-face opening (1) of a nozzle (2) having the air from a duct (3) of a compressor (4) and supported on a supporting structure (5) with extensible part (6) which supports the duct on supports (7);
- with the nozzle (2) downward oriented, the air jet getting out through the spot-face opening (1) determines on the foliage insistance part an impact with shock wave with high vibration effect actuating the separation of the fruits which are on said foliage part.

2. Method and apparatus for picking olives from the tree, as per claim 1), characterized in that at the end of the removal working the fruits are picked from a picking tarpaulin means (8) previously placed on the ground around the trunk.

3. Method and apparatus for picking olives from the tree, as per claim 1), characterized in that in an embodiment the supporting structure (5) with extensibile part (6) is positioned on a truck (9) to be pulled by a taking part (10) of an arm (11) to be moved on joint (12).

4. Method and apparatus for picking olives from the tree, as per claim 1), characterized in that in an embodiment both the supporting structure (5) with extensible part (6) than the compressor (4) are positioned onto the bedplate (13) of a tractor (14).
